# EUROPEAN PATENT APPLICATION

(11) **EP 1 279 865 A2**
(43) Date of publication of application: **29.01.2003**
(21) Application number: 02077700.9
(22) Date of filing: 05.07.2002
(51) Int. Cl.: F16H 25/20, H02K 7/06

(54) **Jackscrew apparatus**

(30) Priority: 23.07.2001 US 307291 P; 05.02.2002 US 68091
(71) Applicant: Delphi Technologies, Inc., Troy, MI 48007 (US)
(72) Inventor: Dzurko, Thomas A., Macomb, MI 48044 (US); Rogers Jr., Lloyd W., Shelby Township, MI 48316 (US); Perkins, Donald M., Sterling Heights, MI 48310 (US); Green Jr., James E., Sterling Heights, MI 48310 (US)
(74) Representative: Denton, Michael John

(57) **Abstract**

A jackscrew apparatus (10) for converting reciprocal rotational motion into reciprocal linear motion includes a nut (12) threaded on a screw (14) for reciprocal translational motion and against rotational motion. A motor (16) is connected to the screw (14) and reversibly rotates the screw (14) about a longitudinal screw axis (18) to drive the nut (12) through its reciprocal translational motion. A lost motion drive linkage (20) is connected between the motor (16) and the nut (12) and allows lost rotational motion between the motor (16) and the nut (12). The lost rotational motion allows the motor (16) to accelerate before bearing the load of rotating the screw (14) and driving the translational motion of the nut (12).

## Description

### FIELD OF THE INVENTION

This invention relates generally to a jackscrew apparatus for converting reciprocal rotational motion into reciprocal linear motion.

### BACKGROUND OF THE INVENTION

It is known for a jackscrew apparatus to include a lock block or nut slidably supported in a cradle for reciprocal translational motion and against rotational motion and a screw that threadedly and drivingly engages the nut. It is also known to fabricate a spur gear on one end of the screw that rotates the screw when driven by a reversible electric motor through a reduction gear set. For example, United States Patent No. 6,019,402 issued 1 February, 2000 to Arabia, Jr. et al., discloses a vehicle door latch including a jackscrew apparatus. The Arabia Jr. et al. jackscrew apparatus includes a lock block slidably supported in a cradle for reciprocal translational motion and against rotational motion. A screw threadedly and drivingly engages the nut. A spur gear is supported on the screw and rotates the screw when driven by a reversible electric motor through a reduction gear set. However, a jackscrew apparatus constructed according to the Arabia, Jr. et al. is not constructed to facilitate the use a relatively small, low-torque electric motor to drive a high-output gearbox.

What is needed is a jackscrew apparatus that can use a relatively small, low-torque electric motor to drive a high-output gearbox.

### SUMMARY OF THE INVENTION

The invention is a jackscrew apparatus for converting reciprocal rotational motion into reciprocal linear motion. The apparatus includes a nut supported for reciprocal translational motion and against rotational motion and a screw threadedly and drivingly engaging the nut. The jackscrew apparatus also includes a motor drivingly connected to the screw and configured to reversibly rotate the screw about a longitudinal screw axis to drive the nut through its reciprocal translational motion.

Unlike the prior art of record, the jackscrew apparatus also includes a lost motion drive linkage connected between the motor and the nut and configured to allow lost rotational motion between the motor and the nut to allow the motor to accelerate before bearing the load of rotating the screw and driving the translational motion of the nut. Therefore, a jackscrew apparatus constructed according to the invention allows for the use of a relatively small, low-torque electric motor to drive a high-output gearbox.

### BRIEF DESCRIPTION OF THE SEVERAL VIEWS OF THE DRAWINGS

These and other features and advantages of the invention will become apparent to those skilled in the art in connection with the following detailed description and drawings, in which:
FIG. 1 is a front view of a jackscrew apparatus constructed according to the invention and installed in an automobile door latch;
FIG. 2 is a perspective view of a driven gear of the jackscrew apparatus of FIG. 1 carried on a screw of the apparatus with a nut of the apparatus shown axially displaced for clarity; and
FIG. 3 is a perspective exploded view of the screw, nut and driven gear of FIG. 2.

### DETAILED DESCRIPTION OF PREFERRED EMBODIMENT

A jackscrew apparatus for converting reciprocal rotational motion into reciprocal linear motion is shown at 10 in the Figures. The apparatus 10 includes a nut 12 supported for reciprocal translational motion and against rotational motion. A screw 14 threadedly and drivingly engages the nut 12. The apparatus 10 also includes a motor 16 drivingly connected to the screw 14 and configured to reversibly rotate the screw 14 about a longitudinal screw axis 18 to drive the nut 12 through its reciprocal translational motion. The apparatus 10 also includes a lost motion drive linkage 20 connected between the motor 16 and the nut 12. The lost motion drive linkage 20 allows lost rotational motion between the motor 16 and the nut 12. This allows the motor 16 to accelerate before bearing the load of rotating the screw 14 and driving the translational motion of the nut 12.

The lost motion drive linkage 20 allows lost rotational motion between the motor 16, which is a reversible electric motor, and the nut 12 in both directions of screw rotation. This allows the motor 16 to accelerate before driving the nut 12 in either direction.

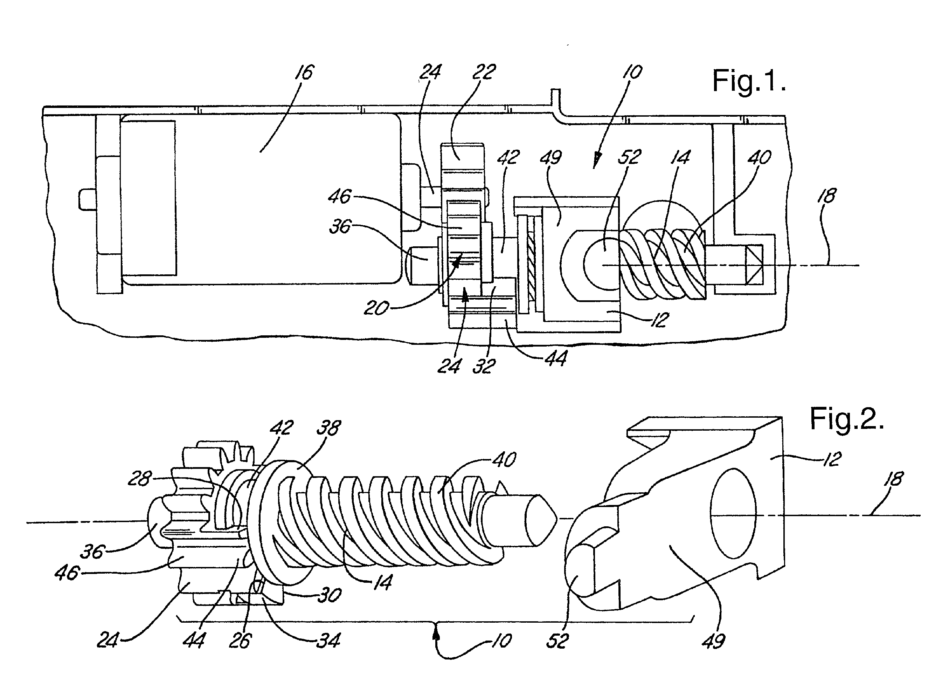

As best shown in Fig. 1, the lost motion drive linkage 20 includes a reduction gear linkage. The reduction gear linkage includes a motor pinion gear 22 fixed to an output armature shaft 24 of the motor 16. The motor pinion gear 22 drivingly engages a driven spur gear 25 carried on the screw 14 for lost motion rotational travel relative to the screw 14 about the screw axis 18, i.e., without rotating the screw 14. The driven spur gear 25 is also supported on the screw 14 for rotational engagement with the screw 14 at a first end of the lost motion travel of the driven gear. The driven gear 25 is also supported on the screw 14 for rotational engagement with the screw 14 at a second end of the lost motion travel of the driven gear.

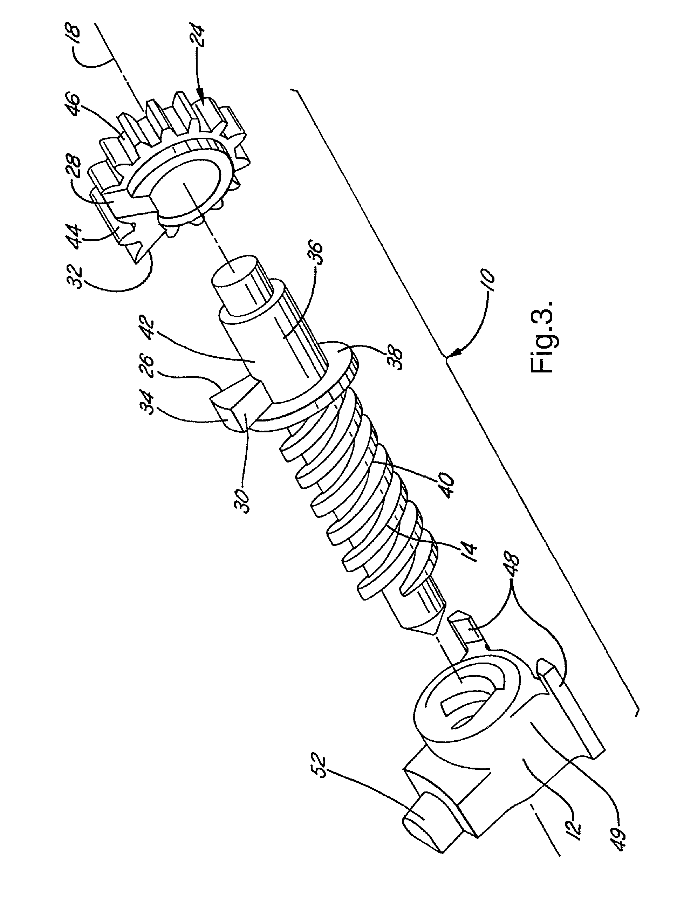

As best shown in Fig. 3, the screw 14 includes a first screw detent surface 26 and the driven gear 25 includes a first gear detent surface 28 rotationally aligned with and positioned to engage the first screw detent surface 26 when the gear reaches the first end of its rotational lost motion travel. When the driven gear 25 reaches the first end of its rotational lost motion travel the first gear detent surface 28 engages the first screw detent surface 26 allowing the driven gear 25 to begin rotating the screw 14 in the direction to advance the nut 12 along the screw 14 away from the driven gear.

As best shown in Figs. 1 and 2, the screw 14 includes a second screw detent surface 30 and the driven gear 25 includes a second gear detent surface 32 rotationally aligned with and positioned to engage the second screw detent surface 30 when the gear reaches the second end of its rotational lost motion travel. When rotation of the driven gear 25 causes the second gear detent surface 32 to engage the second screw detent surface 30, continued rotation of the driven gear 25 causes the screw 14 to rotate in a direction to retract the nut 12 along the screw 14 toward the driven gear.

The first and second screw detent surfaces are disposed on rotationally opposite sides of a screw tab 34 that extends radially and integrally outward from a main shaft 36 of the screw 14. This screw tab 34 abuts an annular flange 38 that also extends radially outward from around the main shaft 36. The annular flange 38 separates a threaded portion 40 of the screw 14 from a non-threaded portion 42 of the screw 14. The first and second gear detent surfaces are disposed on rotationally opposite sides of a gear tab 44 that extends axially and integrally from a main body 46 of the driven gear. The gear tab 44 extends from the main body 46 of the driven gear 25 in a position to rotationally align the first and second gear detent surfaces with the respective first and second screw detent surfaces when the driven gear 25 is seated on the non-threaded portion of the main shaft 36 of the screw 14.

The nut 12 includes a pair of pair of parallel slides that are integrally formed with a main body 49 of the nut 12. The slides are aligned with the screw axis 18 and help to guide the nut 12 along an adjacent surface (also parallel to the screw axis 18) while preventing the nut 12 from rotating as the screw 14 moves the nut 12 along its reciprocal linear path.

A drive peg 52 integrally and radially extends from the nut 12 in a position to engage a mechanism (not shown) to be driven by the jackscrew. The drive peg 52 also helps to support the nut 12 against rotation.

In practice, to operate the jackscrew, the motor 16 is first actuated and begins to accelerate to its full free speed. As the motor 16 accelerates, the output armature shaft 24 of the motor 16 turns the motor pinion gear 22 which turns the driven spur gear 25. For the first approximate 300 degrees of driven gear rotation, the screw 14 does not turn because the gear tab 44 has not yet brought the first gear detent surface 28 into contact with the first screw detent surface 26. Once the first approximate 300 degrees of driven gear rotation are complete, the gear tabs meets the screw tab 34 causing the screw 14 to begin rotating and pushing the nut 12 axially away from the annular flange 38. Once the nut 12 reaches the end of its travel, the motor 16 is de-energized leaving the gear tab 44 in contact with the screw tab 34.

When the time comes that the motor 16 is actuated in a reverse direction to retract the nut 12, the motor 16 first accelerates to its full free sped while turning the motor pinion gear 22 which turns the driven spur gear in a direction opposite the direction it was turned to advance the nut 12. Because of the gear tab 44 of the driven gear 25 began in a position contacting the screw tab 34, the gear is able to rotate through an approximate 300 degrees of rotation before bringing the second gear detent surface 32 of the gear tab 44 into contact with the second screw detent surface 30 of the screw tab 34. Once the motor 16 has reached, in reverse, its full free speed and has turned the driven gear 25 through its first 300 degrees of reverse rotation, and the gear tab 44 has once again contacted the screw tab 34, the driven gear will begin rotating the screw 14 and retracting the nut 12. Once the nut 12 reaches a home position abutting the annular flange 38 the motor 16 is de-energized with the second gear detent surface 32 remaining in contact with the second screw detent surface 30. As such, whenever the motor 16 is again energized to advance the nut 12 along the screw 14, the gear tab 44 will again have an approximate 300 degrees of rotation before contacting the screw tab 34.

As such, a jackscrew apparatus constructed according to the invention will allow a relatively small, low torque electric motor 16 to drive a high output gear box. This is because the lost motion feature of the reduction gear linkage allows the motor 16 to accelerate to its full free speed before starting to rotate the screw 14. This allows the motor 16 to overcome nut 12 driving loads that would otherwise exceed a normal stall torque of the motor 16.

This description is intended to illustrate certain embodiments of the invention rather than to limit the invention. Therefore, it uses descriptive rather than limiting words. Obviously, it's possible to modify this invention from what the description teaches. Within the scope of the claims, one may practice the invention other than as described.

## Claims

1. A jackscrew apparatus (10) for converting reciprocal rotational motion into reciprocal linear motion, the apparatus (10) comprising:
a nut (12) supported for reciprocal translational motion and against rotational motion;
a screw (14) threadedly and drivingly engaging the nut (12);
a motor (16) drivingly connected to the screw (14) and configured to reversibly rotate the screw (14) about a longitudinal screw axis (18) to drive the nut (12) through its reciprocal translational motion; and
a lost motion drive linkage (20) connected between the motor (16) and the nut (12) and configured to allow lost rotational motion between the motor (16) and the nut (12) to allow the motor to accelerate before bearing the load of rotating the screw (14) and driving the translational motion of the nut (12).

2. A jackscrew apparatus (10) as defined in claim 1 in which the lost motion drive linkage (20) is configured to allow lost rotational motion between the motor (16) and nut (12) in at least one direction of screw rotation.

3. A jackscrew apparatus (10) as defined in claim 2 in which the lost motion drive linkage (20) includes a gear linkage including a driven gear supported on the screw (14) for lost motion rotational travel relative to the screw (14) about the screw axis (18) and for rotational engagement with the screw (14) at a first end of the lost motion travel of the driven gear.

4. A jackscrew apparatus (10) as defined in claim 3 in which the driven gear is supported on the screw (14) for rotational engagement with the screw (14) at a second end of the lost motion travel of the driven gear.

5. A jackscrew apparatus (10) as defined in claim 4 in which:
the screw (14) includes a first screw detent (26); and
the driven gear includes a first gear detent (28) rotationally aligned with and positioned to engage the first screw detent (26) when the gear reaches the first end of its rotational lost motion travel to begin rotating the screw (14) in a direction to advance the nut (12) along the screw (14).

6. A jackscrew apparatus (10) as defined in claim 5 in which:
the screw (14) includes a second screw detent (30); and
the driven gear includes a second gear detent (32) rotationally aligned with and positioned to engage the second screw detent (30) when the gear reaches the second end of its rotational lost motion travel to begin rotating the screw (14) in a direction to retract the nut (12) along the screw (14).

7. A jackscrew apparatus (10) as defined in claim 6 in which:
the first and second screw detents are disposed on a screw tab (34) extending radially outward from a main shaft (36) of the screw (14); and
the first and second gear detents are disposed on a gear tab (44) that extends axially from a main body (46) of the driven gear in a position to rotationally align the first and second gear detents with the respective first and second screw detents when the driven gear is seated on the main shaft (36) of the screw (14).

8. A jackscrew apparatus (10) as defined in claim 3 in which the gear linkage (20) is a reduction gear linkage.

9. A jackscrew apparatus (10) as defined in claim 1 in which the motor (16) is a reversible electric motor.

10. A jackscrew apparatus (10) for converting reciprocal rotational motion into reciprocal linear motion, the apparatus (10) comprising:
a nut (12) supported for reciprocal translational motion and against rotational motion;
a screw (14) threadedly and drivingly engaging the nut (12);
a reversible electric motor (16) drivingly connected to the screw (14) and configured to reversibly rotate the screw (14) about a longitudinal
screw axis (18) to drive the nut (12) through its reciprocal translational motion; and
a gear linkage (20) connected between the motor (16) and the screw (14) and including a driven gear supported on the screw (14) for lost motion rotational travel relative to the screw (14) about the screw axis (18) and for rotational engagement with the screw (14) at at least one end of the lost motion travel of the driven gear.

11. A jackscrew apparatus (10) as defined in claim 10 in which:
the screw (14) includes a first screw detent (26); and
the driven gear includes a first gear detent (28) rotationally aligned with and positioned to engage the first screw detent (26) when the gear reaches a first end of its rotational lost motion travel.

12. A jackscrew apparatus (10) as defined in claim 11 in which:
the screw (14) includes a second screw detent (30); and
the driven gear includes a second gear detent (32) rotationally aligned with and positioned to engage the second screw detent (30) when the gear reaches the second end of its rotational lost motion travel.

13. A jackscrew apparatus (10) as defined in claim 12 in which:
the first and second screw detents are disposed on a screw tab (34) extending radially outward from a main shaft (36) of the screw (14); and
the first and second gear detents are disposed on a gear tab (44) that extends axially from a main body (46) of the driven gear in a position to rotationally align the first and second gear detents with the respective first and second screw detents when the driven gear is seated on the main shaft (36) of the screw (14).
